# EUROPÄISCHE PATENTANMELDUNG

(11) **EP 1 519 549 A1**
(43) Veröffentlichungstag der Anmeldung: **30.03.2005**
(21) Anmeldenummer: 03021720.2
(22) Anmeldetag: 25.09.2003
(51) Int. Cl.: H04M 3/51, H04M 3/36, H04M 7/00

(54) **Verfahren zum automatischen Einleiten eines Anrufes**

(71) Anmelder: SIEMENS AKTIENGESELLSCHAFT, 80333 München (DE)
(72) Erfinder: Vizaei, Mohammad, 1220 Wien (AT)
(74) Vertreter: Berg, Peter, Dipl.-Ing.

(57) **Zusammenfassung**

Die Erfindung betrifft ein Verfahren zum automatischen Einleiten eines Anrufes, bei dem die von einem ersten Teilnehmer (T1) eines Telekommunikationsnetzes bestehenden Verbindungen zu weiteren Teilnehmern (T2) erfasst und hinsichtlich ihrer statistischen Gesetzmäßigkeiten ausgewertet werden und dass auf der Grundlage der festgestellten statistischen Gesetzmäßigkeiten Anrufe an die weiteren Teilnehmer eingeleitet werden.

Die Erfindung ermöglicht es insbesondere Dienstleistungsunternehmen, ihre Kunden gezielt zu informieren.

## Beschreibung

### Technisches Gebiet

Die Erfindung betrifft ein Verfahren zum automatischen Einleiten eines Anrufes.

### Stand der Technik

In den vergangenen Jahrzehnten sind Telekommunikationsnetze zu einem wesentlichen Element des modernen Wirtschaftlebens geworden, die den Berufsalltag maßgeblich mitgestalten.

Dazu wurden über eine Vielzahl von Leistungsmerkmalen, d.h. Funktionalitäten der Endgeräte, die Telekommunikationsnetze an die Bedürfnisse der Nutzer angepasst, um so die Handhabung zu vereinfachen und die Leistungsfähigkeit zu erhöhen.

Beispiele dafür sind :
- Anrufweiterleitung
- Anklopfen
- Dreierkonferenz
- Rufnummernanzeige
- Automatischer Rückruf

Für ISDN - Teilnehmeranschlüsse sind die verfügbaren Leistungsmerkmale im Euro-ISDN-Standard DSS1 festgelegt worden.

Völlig neue Möglichkeiten ergeben sich durch die Integration herkömmlicher traditioneller verbindungsorientierter TDM-Netzwerke in packetvermittelnde Computernetzwerke.

Ein Beispiel dafür ist die SURPASS - Architektur von Siemens, eine IP-Technologie für die Konvergenz von Sprach- und Datennetzen. SURPASS bringt auf Basis einer offenen Architektur die hohe Qualität und Sprachservicevielfalt der Echtzeit-Sprachnetze in die Datennetze und ermöglicht umgekehrt den Einsatz von IP-Anwendungen im Sprachnetz. Dies gewährleistet eine weitgehende Weiterverwendung der heutigen Netzinfrastruktur. Mit SURPASS führt Siemens die beiden großen weltweiten Netzwerke, das Telefonnetz (Circuit-Switched-Sprachnetz) und das Internet (Packet-Switched-Datennetz) zusammen und kombiniert die Vorteile paketorientierter, multimedia-fähiger Netzwerke mit der kompletten Sprach-Intelligenz traditioneller Echtzeit-Netzwerke. SURPASS bietet eine offene, hochmodulare Architektur mit vollständiger Administrationskontrolle jeder Komponente, basierend auf der SmartCommander-Betriebsplattform.

Die neuen Netzstrukturen reduzieren die Anzahl der Netzelemente, senken die Betriebskosten und ermöglichen neue Leistungsmerkmale.

### Darstellung der Erfindung

Der Erfindung liegt die Aufgabe zugrunde, die Nutzungsmöglichkeiten eines Telekommunikationsnetzes auf der Basis konvergenter Netzwerkarchitekturen durch neue Leistungsmerkmale zu erweitern.

Erfindungsgemäß wird diese Aufgabe gelöst mit einem Verfahren der eingangs genannten Art, bei dem die von einem ersten Teilnehmer eines Telekommunikationsnetzes bestehenden Verbindungen zu weiteren Teilnehmern erfasst und hinsichtlich ihrer statistischen Gesetzmäßigkeiten ausgewertet werden und bei dem auf der Grundlage der festgestellten statistischen Gesetzmäßigkeiten Anrufe an die weiteren Teilnehmer eingeleitet werden.

Die Erfindung ermöglicht es insbesondere Dienstleistungsunternehmen, ihre Kunden gezielt zu informieren. Dabei kann es sich beispielsweise um Ärzte handeln, die ihre Patienten auf einen Behandlungstermin hinweisen oder aber Automobilwerkstätten, die an ein fälliges Service erinnern.

Vorteilhafte Ausgestaltungen der Erfindung ergeben sich aus den Unteransprüchen.
Günstig ist es dabei insbesondere, wenn die an den ersten Teilnehmer eines Telekommunikationsnetzes gerichteten Anrufe erfasst und ausgewertet werden. Eine in vielen Fällen besonders geeignete Grundlage für die Erfassung und Analyse von Kundenkontakten sind die an einen Dienstleister gerichteten Telefonanrufe. Dabei kann es sich beispielsweise um regelmäßig wiederkehrende Bestellvorgänge handeln, wie der "Freitag-Abend-Anruf" bei einem Pizzazustelldienst. Daher ist es zweckmäßig den Zeitpunkt der Anrufe auszuwerten, in diesem Fall ergibt sich also als Gesetzmäßigkeit: " Der Kunde bestellt jeden Freitag zwischen 19.00 Uhr und 20.00 Uhr eine Pizza". Erfindungsgemäß wird nun der Kunde vom Pizzazustelldienst am Freitag aktiv angerufen.

Dieser automatische Anruf beinhaltet zweckmäßigerweise eine automatisch generierte Ansage - eine Tonbandansage - die dem angerufenen Kunden ein aktuelles Angebot mitteilt und ihn auffordert, bei Interesse an dem Angebot eine bestimmte Taste oder Tastenkombination zu drücken. Wenn der Kunde diese Taste drückt, wird eine Verbindung zwischen ihm und dem Pizzadienst hergestellt.

Die Erfassung und Auswertung der Anrufe kann in einem zeitgemäßen Telekommunikationsnetz mittels einer Open Service Platform einer Vermittlungsstelle wie z.B. der Surpass hiQ 4000 der Siemens AG erfolgen, über die auch die Anrufe an die Kunden eingeleitet werden.

Alternativ dazu ist es möglich die Erfassung und Auswertung der an den ersten Teilnehmer eines Telekommunikationsnetzes gerichteten Anrufe und die Einleitung der Anrufe an die weiteren Teilnehmer in einen mit dem Telekommunikationsnetz verbundenen Rechner auszulagern.

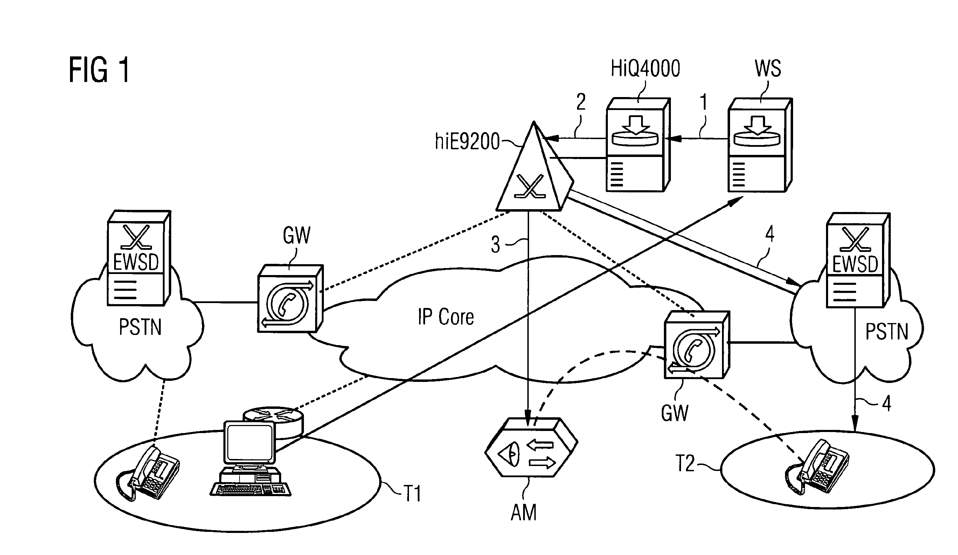

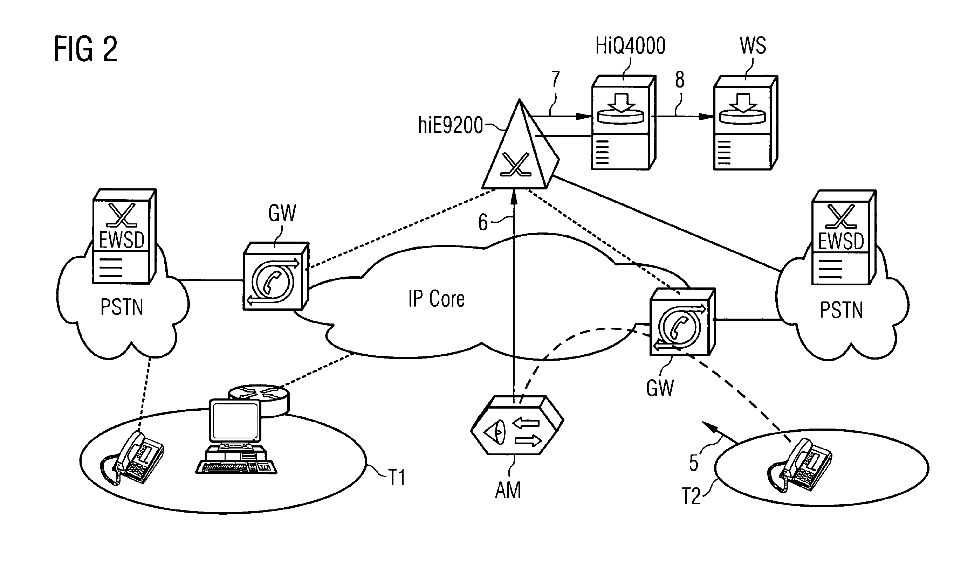

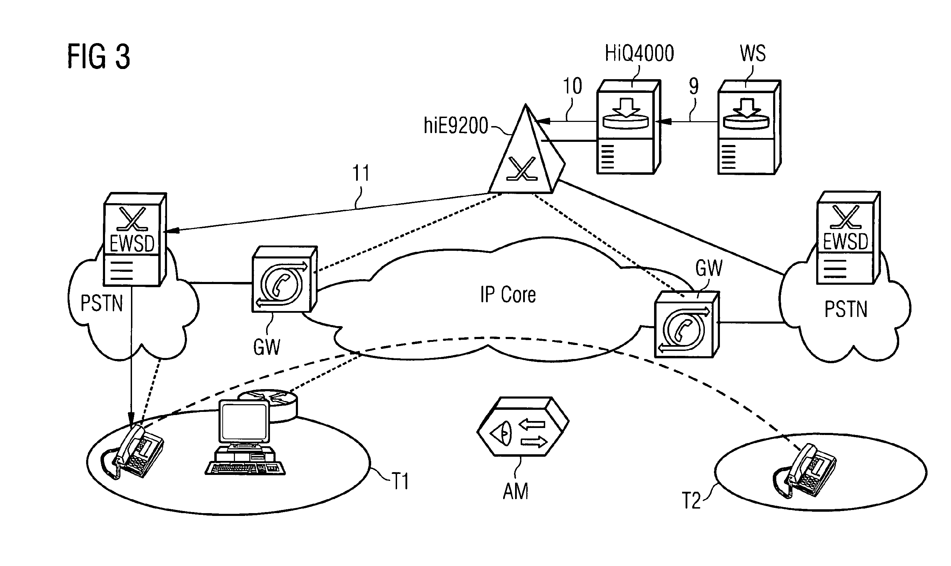

### Kurzbeschreibung der Zeichnung

Die Erfindung wird anhand dreier Figuren näher erläutert, welche jeweils unterschiedliche Phasen im Ablauf des erfindungsgemäßen Verfahrens beispielhaft darstellen.

### Ausführung der Erfindung

Das beispielhafte Kommunikationsnetz umfasst ein packetvermittelndes Kern-Netz nach dem Internet-Protokoll IP Core,welches über Gateways GW mit TDM -Telefonnetze PSTN verbunden ist, die Orts-Vermittlungseinrichtungen EWSD umfassen.

Weiterhin ist eine zentrale Vermittlungseinrichtung, wie beispielsweise das Modell SURPASS hiE 9200 der Siemens AG vorgesehen, welche sowohl die Funktionalität einer herkömmlichen TDM-Vermittlungsstelle als auch einen Softswitch beinhaltet, also eine Kommunikationskomponente für Next Generation Network (NGN), die Dienste und Übertragungstechnik sowohl für herkömmliche Telefonnetze, Netze nach dem Internet Protokoll und Mobilfunknetze getrennt voneinander bereitstellt. Damit lassen sich Funktionen wie Routen, Protokollumsetzung, Ressourcen beziehungsweise Bandbreiten-Management, und die Steuerung von Media-Gateways zur Verfügung stellen.

An diese zentrale Vermittlungsstelle hiE 9200 ist über eine Schnittstelle nach dem INAP - Standard für IN-Dienste eine Open Service Platform für IN Dienste wie z.B. das Modell hiQ 4000 von Siemens als Application Programming Interface beispielsweise nach dem von der Parley-Group vorgeschlagenen Protokoll angeschlossen.

Zusätzlich ist ein herkömmlicher Webserver WS als Hardwarebasis für ein Anwendungsprogramm vorgesehen, mittels dem Datenbanken mit Kundeninformationen verwaltet, aktualisiert und ausgewertet werden und darauf aufbauend Anrufe angestoßen werden. Der Anruf wird mit Hilfe einer Ansagemaschine AM durchgeführt.

Das Ausführungsbeispiel betrifft nun ein Dienstleistungsunternehmen wie beispielsweise eine Arztpraxis, bei dem eine dauerhafte Verbindung zu den Patienten besteht und die einen ersten Teilnehmer T1 an dem Kommunikationsnetz darstellt. Die Patienten, weitere Teilnehmer T2 am Kommunikationsnetz, sollten regelmäßig die Praxis aufsuchen. Die regelmäßig aktualisierte Kundendatei mit den Angaben über den jeweils letzten Besuch und die zweckmäßigen Zeitabstände zwischen den Besuchen ist auf dem Webserver WS hinterlegt, auf dem auch das Anwendungsprogramm läuft, mittels dem der zweckmäßige Zeitraum für den nächsten Besuch jedes Patienten ermittelt wird. Diese Datenbasis wird bei dem Beispiel von der Arztpraxis verwaltet und zur Verfügung gestellt.

Bei einem Unternehmen, bei dem die Verbindung zu den Kunden vorwiegend über telefonische Kontakte besteht, wie z.B. bei einem Pizzazustelldienst, umfasst diese Datenbasis die jeweils letzten Anrufe, aus denen mittels Anwendungsprogramm Bestellgewohnheiten des jeweiligen Kunden ermittelt werden können. So kann beispielsweise festgestellt werden, dass der Kunde regelmäßig am Freitag zwischen 19.00 Uhr und 20.00 Uhr eine Pizza bestellt.

Diese Datenbasis kann dadurch erstellt werden, dass Anrufe zu dem Pizzazustelldienst in der zentralen Vermittlungsstelle hiE 9200 durch einen IN-Triggerpunkt erfasst werden. Jeder Ruf zu diesem Teilnehmer wird dann an die Open Service Platform HiQ 4000 gesandt. Die Statistikdaten können dann mittels dieser Platform oder dem Webserver WS gesammelt werden.

Anstelle des Webservers Ws kann aber auch vorgesehen werden, dass die Open Service Platform HiQ 4000 ihre Daten an einen PC direkt beim Dienstleistungsunternehmen sendet, sodass die Daten vor Ort verwertet werden können.

Beim vorliegenden Ausführungsbeispiel soll nun aufgrund der ausgewerteten Informationen über einen bestimmten Kunden an einem Freitag um 19.00 Uhr ein Anruf bei diesem Kunden ausgelöst werden, um ihn zum Kauf einer Pizza zu motivieren.

Der Anstoß dazu erfolgt in einem ersten Schritt 1 durch das Anwendungsprogramm auf dem Webserver WS mittels entsprechender Nachricht an die Open Service Platform HiQ 4000. Diese verwendet nach INAP CS.2 standardisierte IN-Funktion "Collect&Prompt" um über die zentrale Vermittlungsstelle hiE 9200 Rufe zur Ansagemaschine und zu dem als weiteren Teilnehmer T2 registrierten Zielkunden aufzubauen und die beiden daraufhin zu verbinden (Schritte 2,3 und 4).

Wenn der Kunde T2 aufgrund der Ansage mit dem Dienstleister T1 verbunden werden will, hat er dies durch eine entsprechende Tasteneingabe anzuzeigen (Schritt 5). Diese Tasteneingabe - z.B. die Ziffer 1 - wird in der Ansagemaschine erkannt und in Schritt 6 der zentralen Vermittlungsstelle hiE 9200 signalisiert. Die entsprechende Kommunikation basiert auf dem "media gateway control protocol (MGPC)".

Von der zentralen Vermittlungsstelle hiE 9200 wird die Anforderung über die INAP-Schnittstelle an die Open Service Platform HiQ 4000 (Schritt 8) und an das Anwendungsprogramm auf dem Webserver WS weitergeleitet. Mittels diesem wird nun in der bereits beschriebenen Weise über Open Service Platform HiQ 4000 und zentraler Vermittlungsstelle hiE 9200 der Aufbau der Verbindung zwischen den Teilnehmeranschlüssen von Kunde T2 und Dienstleister T1 und die Trennung der Verbindung zur Ansagemaschine AM veranlasst.

## Patentansprüche

1. Verfahren zum automatischen Einleiten eines Anrufes, **dadurch gekennzeichnet, dass** die von einem ersten Teilnehmer (T1) eines Telekommunikationsnetzes bestehenden Verbindungen zu weiteren Teilnehmern (T2) erfasst und hinsichtlich ihrer statistischen Gesetzmäßigkeiten ausgewertet werden und dass auf der Grundlage der festgestellten statistischen Gesetzmäßigkeiten Anrufe (4) an die weiteren Teilnehmer (T2)eingeleitet werden.

2. Verfahren nach Anspruch 1, **dadurch gekennzeichnet, dass** die an den ersten Teilnehmer (T1) eines Telekommunikationsnetzes gerichteten Anrufe von weiteren Teilnehmern (T2) erfasst und ausgewertet werden.

3. Verfahren nach Anspruch 2, **dadurch gekennzeichnet, dass** die Zeitpunkte der Anrufe von den weiteren Teilnehmer (T2) erfasst und hinsichtlich ihrer statistischen Gesetzmäßigkeiten ausgewertet werden.

4. Verfahren nach einem der Ansprüche 1 bis 3, **dadurch gekennzeichnet, dass** die auf der Grundlage der festgestellten statistischen Gesetzmäßigkeiten eingeleiteten Anrufe (4) an die weiteren Teilnehmer (T2) eine automatisch generierte Ansage beinhalten und dass durch eine vorgegebene Eingabe (5) des weiteren Teilnehmers (T2) eine Verbindung zwischen dem ersten Teilnehmer (T1)und dem weiteren Teilnehmer (T2) hergestellt wird.

5. Verfahren nach einem der Ansprüche 2 bis 4, **dadurch gekennzeichnet, dass** die Erfassung und Auswertung der an den ersten Teilnehmer eines Telekommunikationsnetzes gerichteten Anrufe in einer Vermittlungsstelle des Telekommunikationsnetzes (hiE 9200, hiQ 4000, WS)erfolgt und dass die Anrufe an die weiteren Teilnehmer (T2) von der Vermittlungsstelle (hiE 9200, hiQ 4000, WS)eingeleitet werden.

6. Verfahren nach einem der Ansprüche 2 bis 5, **dadurch gekennzeichnet, dass** die Erfassung und Auswertung der an den ersten Teilnehmer (T1) eines Telekommunikationsnetzes gerichteten Anrufe in einem mit dem Telekommunikationsnetz verbundenen Rechner (WS) erfolgt und dass die Anrufe an die weiteren Teilnehmer (T2) von dem Rechner eingeleitet werden.
